(19) Europäisches Patentamt

European Patent Office

Office européen des brevets

(11) **EP 1 302 793 A2**

(12) **EUROPEAN PATENT APPLICATION**

(43) Date of publication:
**16.04.2003 Bulletin 2003/16**

(51) Int Cl.$^7$: **G02B 6/126**

(21) Application number: **02257099.8**

(22) Date of filing: **14.10.2002**

| | |
|---|---|
| (84) Designated Contracting States:<br>**AT BE BG CH CY CZ DE DK EE ES FI FR GB GR**<br>**IE IT LI LU MC NL PT SE SK TR**<br>Designated Extension States:<br>**AL LT LV MK RO SI**<br><br>(30) Priority: **16.10.2001 GB 0124840**<br><br>(71) Applicant: **Nanyang Technological University**<br>**Singapore 639798 (SG)** | (72) Inventors:<br>• **Tan, Peh Wei**<br>  **No. 03-261 Singapore 579735 (SG)**<br>• **Lam, Yee Loy**<br>  **No. 14-261 Singapore 680271 (SG)**<br><br>(74) Representative: **Finnie, Peter John**<br>**Gill Jennings & Every,**<br>**Broadgate House,**<br>**7 Eldon Street**<br>**London EC2M 7LH (GB)** |

(54) **A polarization beam splitter**

(57)    In the present invention, a new design for a planar waveguide polarization splitter is based on a Mach-Zehnder interferometer (MZI) which utilises multimode interference (MMI) regions force electric beam splitting (11) and combining (12), and achieves polarisation selectivity by introducing different amounts of modal birefringence to the arms (14,15) of the MZI via the waveguide structure of the two arms.

Figure 1

EP 1 302 793 A2

**Description**

**Field of the Invention**

The present invention relates to a device for polarization splitting, whereby transverse electric and transverse magnetic polarized light can be separated. The implementation of the device in a planar waveguide structure makes it particularly well suited to photonic integrated circuits.

**Background to the Invention**

Polarization beam splitters are useful in a wide range of applications. Proposed applications include the correction of polarization dispersion in wavelength division multiplexers, based on arrayed waveguide gratings (AWG), in polarization stabilizers and in planar light-wave circuit polarization analysers.

Recently, a number of polarization splitters (PS) have been realised by a variety of techniques. Polarization splitters have been fabricated on lithium niobate, by taking advantage of the birefringence of the crystal. That is to say, use is made of the different refractive indices experienced by a transverse electric (TE) and transverse magnetic (TM) wave propagating in the crystal. However, this approach is expensive and applicable mainly to discrete devices.

Another type of polarization splitter has been realised using an ARROW-B type glass waveguide with asymmetric Y-branch. This polarization splitter has the advantage of easing the requirement for precise mask alignment. However, precise control of the thickness of the intermediate, high refractive index (RI) layer of the ARROW waveguide is required. The extinction ratios attainable theoretically were evaluated to be -27dB and -21 dB for the TM and TE modes, respectively. Several workers have investigated other types of asymmetric Y-branch polarization splitter.

Besides asymmetric Y-branch splitters, polarization splitters are also realised using Mach-Zehnder interferometer (MZI) based configurations. A PS fabricated in GaAs/AlGaAs has been reported recently, which combined a series of height-tapered, Y-branch structures in an MZI. By applying an electric field to the arms of the MZI, a tunable PS is achieved. An extinction ratio of 20dB was reported. However, the tapered branches pose fabrication difficulties.

A PS constructed using semiconductor InGaAsP/InP materials and based on an MZI has also been reported. This polarisation splitter is realised by applying a metal cladding to one arm of the interferometer to induce birefringence. Although optical propagation loss induced by the metal cladding was reduced by means of a $SiO_2$ buffer layer, the achievable extinction ratio was limited to approximately 19dB and 15dB for the TE and TM modes, respectively.

A further MZI based TE/TM beam splitter fabricated in silica has been produced through the stress applied by a silicon film. The silicon film is deposited on one arm of the MZI by sputtering and then trimmed to the required shape by a laser beam. The stress-applying film enhances the birefringence of the arm. In this case, a polarization extinction ratio of 25.6dB was achieved.

**Summary of the Invention**

In the present invention, a new design for a planar waveguide polarization splitter is based on a Mach Zehnder interferometer (MZI) which utilises multimode interference (MMI) regions for symmetric beam splitting and combining, and achieves polarization selectivity by introducing different amounts of modal birefringence to the two arms of the MZI via the waveguide structure of the two arms.

Preferably, the beam splitter at the input of the MZI comprises a symmetrical 1x2 MMI coupler, as it is inherently easier in this configuration to achieve equal splitting between the two arms for both TE and TM polarized beams.

Preferably, the beam combiner at the output of the MZI comprises a general 2x2 MMI coupler to provide an output port for each of the TE and TM polarized beams.

Two types of waveguide dependent modal birefringence control are proposed for the MZI based polarization splitter:

(i) the relative thickness of the cladding layer of at least a portion of the two waveguide arms of the MZI.

(ii) the relative width of at least a portion of the two waveguide arms of the MZI.

In the first type of modal birefringence control, the cladding thickness of a portion (the phase shift region) of one waveguide is chosen to achieve the desired birefringence for this asymmetric arm of the MZI. By selecting the correct cladding thickness for a given length and width of the phase shift region, the appropriate amount of birefringence can be achieved over a desired wavelength range. Preferably, the said birefringence is such that when optical beams from the two arms of the MZI recombine at the output MMI coupler, the TE and TM polarized components emerge substantially from different output ports.

A further benefit of this approach is that the cladding thickness of regions of the two waveguide arms either side of the phase shift region can be fabricated so as to adjust the optical propagation losses for the two arms. Preferably, the cladding thickness is such that losses in the two arms of the MZI are substantially equal. This will lead to more complete constructive and destructive interference and hence a higher extinction ratio for the TE and TM polarized beams at their respective output ports.

In the second type of modal birefringence control, the width of one of the, otherwise substantially similar, waveguide arms is adjusted to achieve the desired birefringence. Preferably, the birefringence is such that when optical beams from the two arms of the MZI recombine at the output MMI coupler, the TE and TM polarized components emerge substantially from different output ports.

Thus the present invention provides a simple MZI based planar waveguide polarization splitter wherein only the waveguide structure of the two arms of the MZI is used to achieve the required birefringence difference. The structure of the waveguides is simpler to fabricate than previous designs and no additional cladding layers are required. A first example of the present invention achieves superior extinction ratios via differential cladding thickness of the two MZI arms. A second example further simplifies the fabrication process by using different waveguide widths for the two MZI arms, which requires the use of only one lithography and etching step.

## Brief Description of the Drawings

Examples of the present invention will now be described in detail with reference to the accompanying drawings, in which:

Figure 1 is a perspective view of an MZI based planar waveguide polarisation splitter, in accordance with the present invention, wherein modal birefringence is controlled by cladding thickness;
Figures 2A and 2B are, respectively, a cross section through one arm of the MZI and a schematic plan view of the MZI shown in Figure 1;
Figures 3A and 3B are, respectively, plots of effective modal refractive index and TE-TM modal index difference versus cladding thickness $t$ for three different widths of waveguide arm, for the MZI shown in Figure 2;
Figures 4A and 4B are simulated output optical field distributions for TE and TM polarized input beams, respectively;
Figures 5A and 5B are, respectively, plots of modal extinction ratio and insertion loss versus wavelength for the device shown in Figure 2 (with $W$ = 5.2μm);
Figures 6A, 6B and 6C are plots, for the device shown in Figure 2, of modal extinction ratio versus wavelength, where $t$ is increased by 20 nm, $L_P$ is additionally increased by 5μm and W is additionally decreased by 0.2μm, respectively;
Figures 7A and 7B are, respectively, a schematic plan view and a cross section through one arm of an MZI based planar waveguide polarisation splitter, in accordance with the present invention, wherein modal birefringence is controlled by difference in MZI waveguide arm width;
Figure 8 is a plot of modal extinction ratio versus waveguide width for the device shown in Figure 7; and,
Figure 9 is a plot of modal extinction ratio versus wavelength for the device shown in Figure 7.

## Detailed Description

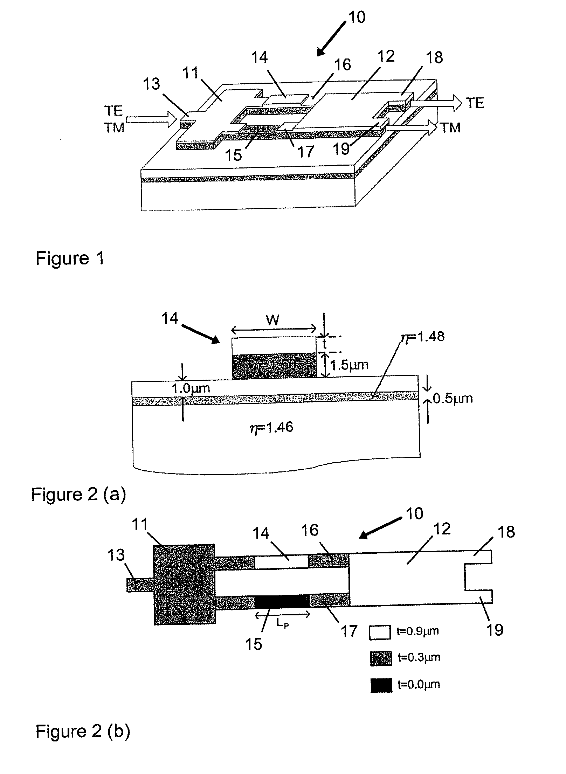

The planar layout of a first example of a polarization splitter in accordance with the present invention is shown in Figure 1.

The device comprises a planar waveguide Mach Zehnder Interferometer (MZI) 10 which utilises multimode interference (MMI) regions for beam splitting 11 and combining 12, and achieves polarization selectivity by introducing different amounts of birefringence to the two arms, 14 and 15, of the MZI 10 via the waveguide structure of the two arms 14 and 15.

A first MMI coupler 11 is a symmetrical 1x2 coupler with a single input port 13. It is inherently easier to achieve equal splitting between the two arms for both TE and TM polarization in this configuration. In a general interference configuration, the beat length of the TE and TM guided modes needs to be identical in order to achieve equal power splitting for both TE and TM polarized modes. The length of the first 1x2 MMI 11 is given by:

$$L_{MMI_1} = (3/8)L_{\pi}$$

where the beat length of the MMI 11 is given by $L_{\pi} = \pi/(\beta_0 - \beta_1)$, where $\beta_0$ and $\beta_1$ are the propagation constants of the first and second modes of the MMI, respectively. The relative phases of the two output arms of a symmetrical 1x2 MMI is inherently zero.

The length of the second MMI coupler 12 is given by:

$$L_{MMI_2} = (3/2)L_\pi$$

A $\pm\pi/2$ phase difference between the input arms, 16 and 17, of the second MMI 12 would result in the light converging at one of the output arms, 18 and 19.

For the TE polarized beam to converge at either one of the output waveguides, 18 and 19, the relative phase, $\Delta\phi_{TE}$, of the TE beam between the upper 14 and lower 15 arms of the MZI 10 needs to be $\pm\pi/2$, leading to the following condition:

$$\Delta\phi_{TE} = k_0 \Delta\eta_{TE} L_\Delta = (2P+1)\frac{\pi}{2}$$

where $k_0$ is the free-space propagation constant, $\Delta\eta_{TE}$ is the difference in effective refractive index of the relevant fundamental mode (modal index) between the upper 14 and lower 15 arms, $L_\Delta$ is the required length for the phase shift and $P$ is any integer.

However, for the TM polarized beam to converge at the other output waveguide, the phase difference for TM polarization between the two arms needs to be $\pm\pi$ different from that of the TE polarization beam:

$$\Delta\phi_{TM} = \Delta\phi_{TE} \pm \pi$$

An end view of the structure of one waveguide arm 14 of the MZI is shown in Figure 2A. The difference in modal index of TE and TM modes ($\Delta\eta_{TE\text{-}TM}$) is varied by adjusting the thickness of the upper cladding $t$. A plan view of the device is shown in Figure 2B.

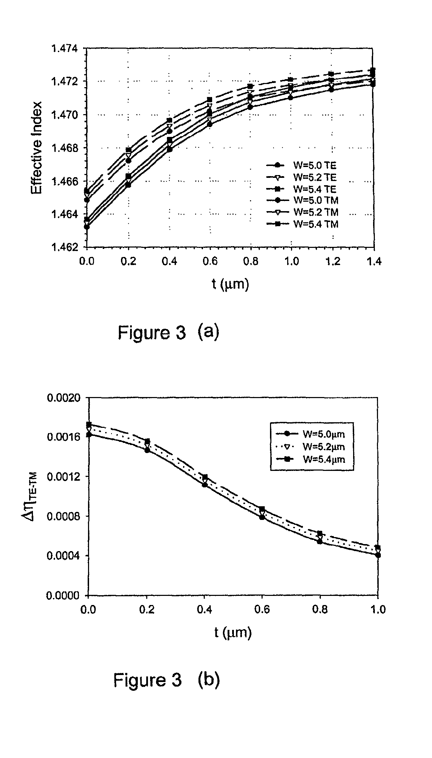

A plot of the modal index for TE and TM polarization against $t$ is shown in Figure 3A whilst a plot of the corresponding difference between the TE and TM modal indices is shown in Figure 3B. The beat length of the interferometer is the length whereby the phase difference between the two arms is $\pi$.

The TE-TM splitter is realised when the phase shift region between the upper 14 and lower 15 arms satisfy the following condition:

$$L_{TE}/L_{TM} = 2/(2P + 1)$$

where $L_{TE}$ and $L_{TM}$ are the interferometer beat lengths of the TE and TM modes, respectively and $P$ represents an integer.

The total length $L_P$ of the phase shift region is thus given by:

$$L_P = (P + 1/2)L_{TE}$$

The integer $P$ is the number of times that a $\pi$-phase shift exists between the two arms of the interferometer. A smaller $P$ would result in a larger bandwidth and greater tolerance to fabrication error. However, a larger $P$ would result in greater wavelength selectivity if that is required. In this example, $P$ was selected to be 5, which corresponds to an upper cladding thickness of about 900nm, and the length of the phase shift region was set at 660$\mu$m.

An imbalance loss between the upper 14 and lower 15 arms of a Mach-Zehnder interferometer results in imperfect constructive and destructive interference. This would reduce the extinction ratio at the output ports, 18 and 19. In order for the upper and lower arms to incur similar loss, the cladding thickness of the access waveguides is chosen such that their effective index $\eta_A$ satisfies the following condition:

$$\frac{\eta_A - \eta_0}{\eta_0 + \eta_A} = \frac{\eta_1 - \eta_A}{\eta_1 + \eta_A}$$

where $\eta_0$ and $\eta_1$ are the effective indices of the phase-shift region in the upper and lower waveguides respectively. Since $(\eta_1 + \eta_A)/(\eta_0 + \eta_A) \cong 1$, $\eta_A$ is approximately equal to $(\eta_1 + \eta_0)/2$. This gives a cladding thickness of about 0.3$\mu$m

for both TE and TM polarizations.

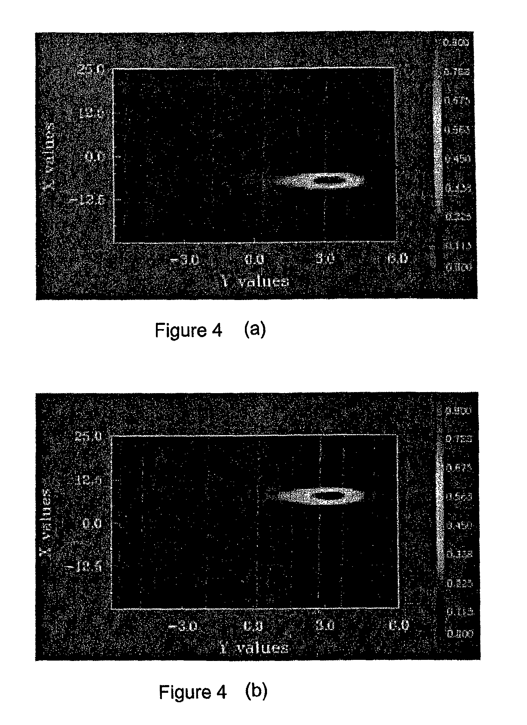

Figures 4A and 4B are the output optical field distributions, simulated by a Beam Propagation Method (BPM), for TE and TM polarized input beams, respectively. The size of the mesh used for the simulation was 500x300 with a propagation step size of 0.5 $\mu$m.

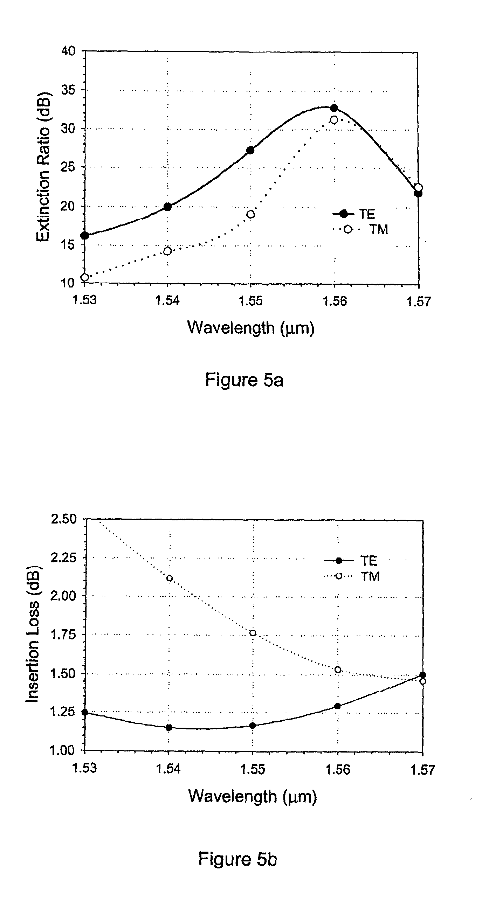

The extinction ratio is calculated by dividing the overlap integral of the modal field of the upperwaveguide 18 with that of the lower waveguide 19 for TE polarization and vice versa for TM polarization. Figure 5A shows a plot of extinction ratio against wavelength for a simulated device with a phase-shift region of width 5.2 $\mu$m. The thicknesses of the upper cladding of the phase shift region of the two arms are 900nm and 0nm, respectively. Over a 30nm range, the extinction ratios for both TE and TM polarizations are over 15dB, reaching a maximum of over 32dB.

The insertion loss of the device is calculated by multiplying the propagation loss with the coupling loss. The coupling loss is the power overlap integral of the immediate output field with the fundamental mode of the output waveguide. Those factors which contribute to the insertion loss are: leakages into the substrate, radiation of the multimode interference coupler and the extinction ratio. The insertion loss is plotted against wavelength in Figure 5B. TM polarized light has a higher loss at shorter wavelength, due to both its propagation loss and coupling loss increasing with reducing wavelength. TE polarized light has a loss which is minimal at approximately 1550nm, where the propagation and coupling losses are at a minimum, and increases with longer wavelength. The leakage loss can be reduced by further optimisation of the waveguides.

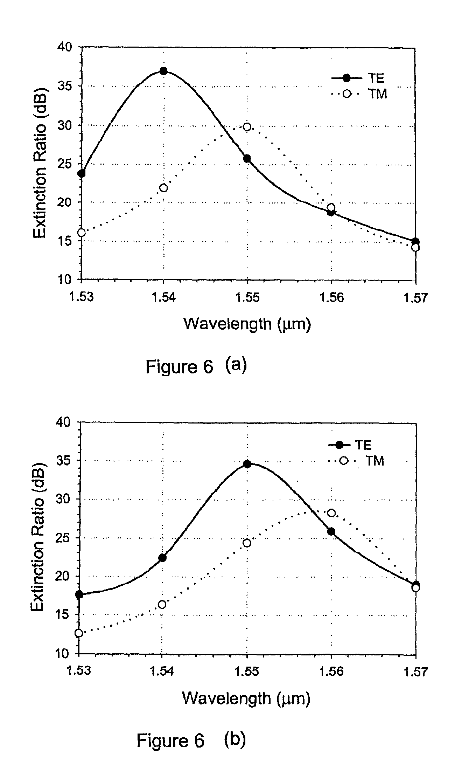

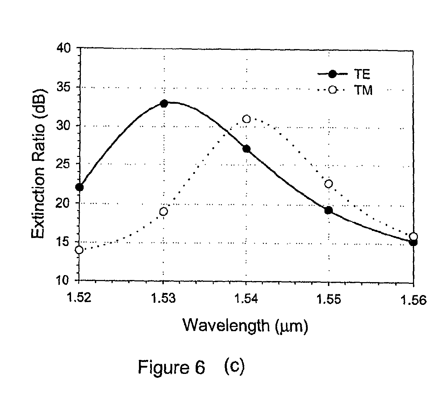

Next the tolerance of the various dimensions of the TE-TM splitter was investigated. Figure 6A is a plot of the extinction ratio when the upper cladding of the upper arm is increased from 900nm to 920nm, as compared to the results shown in Figure 5A. This causes the peak extinction ratio for TE polarization to drift by 20nm to a shorter wavelength, while the peak extinction ratio for TM polarization drifts by only 10nm to a shorter wavelength.

The effect of the length of the phase shift region can be observed by comparing Figure 6B with Figure 6A. Here, the length of the phase shift region $L_P$ has been increased by 5$\mu$m, leading to the peak extinction ratio for both TE and TM polarizations shifting towards longer wavelength by about 10nm.

The effect of variation in the width of the phase shift region can also be seen by comparing Figure 6C with Figure 6B. Here, a 0.2$\mu$m reduction in the width $W$ resulted in the shifting of the peak extinction ratio by 20nm to a shorter wavelength, for both TE and TM polarizations. Thus a 0.2$\mu$m reduction in width would require a 10$\mu$m increment in length to achieve compensation.

The splitting of the TE and TM modes of this device is carried out through adjustment of the cladding thickness $t$. The thickness of the cladding of the arms determines the wavelength matching of the peak extinction ratio for TE and TM modes. A I0 nm tolerance in the thickness would result in the wavelengths of the peak extinction ratios of the TE and TM modes being within10nm of each other. The effect of width on the matching of the optimal wavelength for TE and TM modes is not as critical.

This example of a polarization splitter has the advantages of high extinction ratio, compact size and compatibility with other silica based planar light-wave devices. Extinction ratios of over 30dB are attainable for both TE and TM modes, with an insertion loss of about 1.25dB and 1.75dB for the TE and TM modes, respectively. The tolerances of various dimensions have been investigated in terms of the shift in the optimal wavelength. A $\pm$ 0.2$\mu$m tolerance in width can be compensated by a corresponding $\mp$ 10.0$\mu$m adjustment in the length of the phase shift region. Using a higher index upper cladding with a shorter length for the phase shift region we can further increase the bandwidth of the TE-TM splitter. These results indicate that this polarization splitter performs better than other types of substrate based TE-TM polarization splitters.

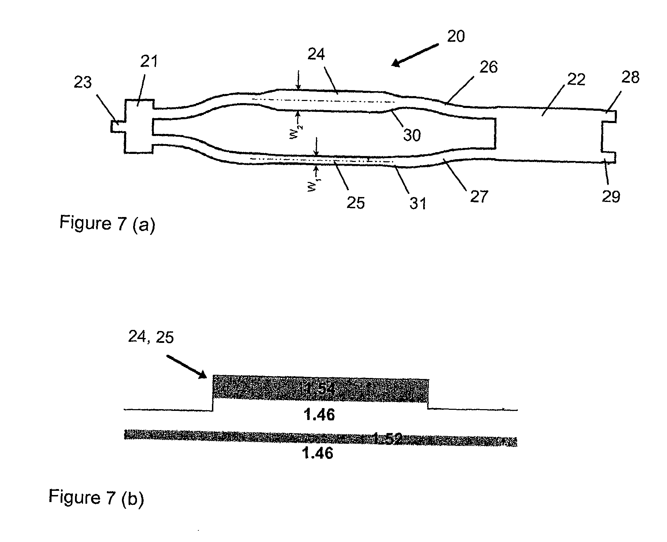

The planar layout of a second example of a polarization splitter 20 in accordance with the present invention is shown in Figure 7A. It is based on an MZI configuration and includes two MMI couplers, 21 and 22, and a phase shift region made up of two arms, 24 and 25, of different width and of length $L_P$, with the two arms spaced 50$\mu$m apart. The phase shift regions, 24 and 25, are connected to the access waveguides, 26 and 27, by waveguide tapers, 30 and 31. The tapers reduce the losses and prevent the excitation of higher order modes. The operational wavelength of the polarization mode splitter is designed for the conventional C band, which is located around 1.55$\mu$m.

The cross-sectional structure of one arm of the MZI based polarization mode splitter is shown in Figure 7B. The thickness and index of each layer is consistent throughout the entire device. Only the lateral dimension of the waveguide arms varies, and is designed to provide large changes of modal birefringence corresponding to the variation of the width.

The waveguide consists of two high index layers. The upper part of the ridge consists of a layer of high refractive index material ($\eta$ = 1.54) with a thickness of 700nm. This upper layer is highly birefringent due to the high index step at the boundary with air. On its own, this layer would support a single TE mode close to cutoff, with no guided TM mode. With the presence of the ridge and the high refractive index ($\eta$ = 1.52) lower layer of the waveguide, about 1$\mu$m below, the optical fields of the TE and TM modes are distributed between the two layers in accordance with the width of the ridge. The birefringence of the lower layer is much smaller and this allows the modal birefringence to be varied widely by varying only the width of the ridge.

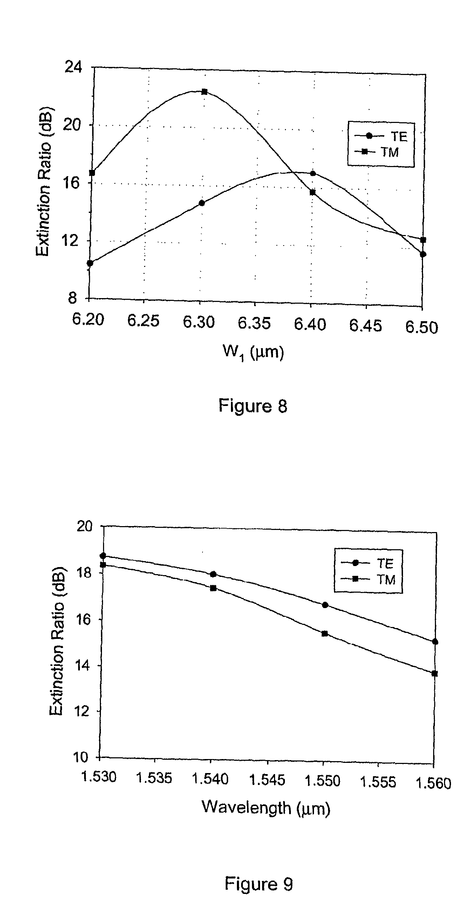

Figure 8 shows the variation in extinction ratio with the width of the narrow arm $W_1$, when the width of the wider arm is fixed at 15 μm. The dimension $W_1$ is the most sensitive lateral dimension of the entire layout. It can be seen that if $W_1$ is within the range of 6.25μm to 6.5μm, the extinction ratio is above 12dB for both TE and TM modes. If the dimension of $W_1$ can be controlled more tightly, to fall within 6.3μm to 6.4μm, an extinction ratio of over 15dB for both TE and TM modes is expected.

The dependence of the extinction ratio on the operating wavelength is shown in Figure 9. In this example, the widths of the two arms, $W_1$ and $W_2$, are set to 6.4 μm and 15 μm, respectively. The extinction ratio remains high over the entire conventional C band and without drastic variation. This is due to the large difference in the birefringence of the two arms, which allows only 4.5 beat lengths for the condition of polarization mode splitting to be met.

A breakdown of the insertion loss associated with this device, for two different values of $W_1$, is shown below in Table 1.

Table 1

| Width $W_1$ | Propagation Loss (dB) | Power Overlap Integral | Total Loss (dB) |
|---|---|---|---|
| TE Modes | | | |
| $W_1$ = 6.2μm | 2.1539 | 85.33% | 2.84 |
| $W_1$ = 6.4μm | 2.1761 | 89.43% | 2.66 |
| TM Modes | | | |
| $W_1$ = 6.2μm | 1.8319 | 84.61% | 2.56 |
| $W_1$ = 6.4μm | 1.8255 | 82.16% | 2.68 |

The propagation loss is the variation of the total power as it propagates through the device. The propagation loss is typically in the region of 2.17dB and 1.83dB for TE and TM modes, respectively. The propagation losses do not vary significantly with $W_1$. The power overlap integral (column 3) refers to the power overlap integral of the output power with the fundamental mode of the targeted waveguide. The typical total loss of the device is thus around 2.85dB to 2.55dB for TE and TM modes, respectively. The variation with wavelength within the conventional C band does not have a very significant effect on the loss.

This example of a polarization splitter requires only a single etching step. However, a much larger length is required to achieve a good extinction ratio, resulting from the lower lateral confinement and longer beat length. Although the extinction ratio and loss performance is somewhat inferior to the first example of the present invention, it does nevertheless provide a cheap and simple solution to polarization splitting of optical beams.

**Claims**

1. A planar waveguide polarization splitter comprising a Mach Zender interferometer arrangement having multimode interference regions for symmetric beam splitting and combining, wherein the interferometer comprises two arms forming phase shift regions, the waveguide structure of the arms being asymmetric so as to introduce different amounts of modal birefringence in each arm and thereby achieve polarization selectivity for TE and TM modes.

2. A polarization splitter according to claim 1, in which the asymmetric waveguide structure is such that the relative thickness of a cladding layer in each arm differs over at least a portion of the length of one arm.

3. A polarization splitter according to claim 2, in which the thickness of the cladding layers in each arm is such that optical propagation losses in each arm are substantially the same.

4. A polarization splitter according to claim 2 or 3, in which the cladding thickness over at least a portion of the length of one arm is increased.

5. A polarization splitter according to any of claims 2 to 4, in which the thickness of a cladding layer over at least a portion of the length of one arm is reduced.

6. A polarization splitter according to claim 1, in which the asymmetric waveguide structure is such that the relative width of the two arms differs over at least a portion of the length of one arm.

**7.** A polarization splitter according to claim 6, in which the structure of the two arms in the vertical direction is the same.

**8.** A polarization splitter according to any preceding claim, comprising a beam combiner at an output of the Mach Zender interferometer providing a respective output port for TE and TM polarized light.

**9.** A polarization splitter according to any preceding claim, in which the two arms are parallel to each other.

Figure 1

Figure 2 (a)

Figure 2 (b)

Figure 3 (a)

Figure 3 (b)

Figure 4    (a)

Figure 4    (b)

Figure 5a

Figure 5b

Figure 6 (a)

Figure 6 (b)

Figure 6   (c)

Figure 7 (a)

Figure 7 (b)

Figure 8

Figure 9